# EUROPEAN PATENT APPLICATION

(11) **EP 1 557 077 A1**
(43) Date of publication of application: **27.07.2005**
(21) Application number: 05250206.9
(22) Date of filing: 17.01.2005
(51) Int. Cl.: A01B 1/22

(54) **Adjustable tool**

(30) Priority: 22.01.2004 GB 0401415
(71) Applicant: Duffy, Paul Anthony, Sale, Cheshire (GB)
(72) Inventor: Duffy, Paul Anthony, Sale, Cheshire (GB)
(74) Representative: Hamilton, Alistair

(57) **Abstract**

A hinge mechanism is disclosed. The hinge mechanism has particular application for connecting a tool head with a tool shaft. The hinge mechanism has first and second pivotably connected hinge members. These are respectively adapted for connection with a tool head and tool shaft. The first hinge member has angularly spaced apertures. The tool shaft is provided with an actuating rod that is moveable between an engaged position in which it engages with an aperture of the first hinge member and a disengaged position in which it does not so engage. Rotation of the first hinge member with respect to the second hinge member presents different apertures to the actuating rod at different rotational angles. There is also disclosed a tool and a kit of tools incorporating such a hinge mechanism.

## Description

This invention relates to adjustable tools, in particular to long-handled tools such as shovels. The invention is also applicable to other similar tools such as spades, forks etc.

Many adjustable tools have been proposed in the past. For example, US-A-1741004 shows a shovel having an adjustably angled blade which is pivotable with respect to the shaft. Angular adjustment is provided by means of a toothed member attached to the neck of the blade, the toothed member co-operating with a gate element attached to a moving rod. This arrangement is complicated in its construction and vulnerable to fouling or damage during use.

A spade with an adjustably angled blade is also shown in GB-A-923601. Again, a toothed member is attached to the neck of the blade and a gate element is attached to a moving rod, which in this case slides within the hollow shaft of the tool. Again, the arrangement is complicated, the toothed member protruding from the shaft and liable to fouling or damage. A similar arrangement is also shown in GB-A-752739.

The adjustable tools of the prior art all share the disadvantages enumerated above. There is therefore a requirement for a tool having an adjustably angled head, the tool being of simple, robust, construction and being easy and safe to operate.

The invention therefore provides a hinge mechanism for connecting a tool head with a tool shaft, the hinge mechanism comprising first and second pivotably connected hinge members adapted for connection with a tool head and tool shaft respectively, the first hinge member having angularly spaced apertures, the tool shaft being provided with an actuating rod which is moveable between an engaged position in which it engages with an aperture of the first hinge member and a disengaged position in which it does not so engage, rotation of the first hinge member with respect to the second hinge member presenting different apertures to the actuating rod at different rotational angles.

Preferably, the tool shaft is hollow, the actuating rod moving within the hollow shaft. Advantageously, means are provided to stop the tool head rotating past a certain point. Preferably, said means comprise a back plate positioned so as to stop reverse rotation of the head past its straight position.

In a preferred embodiment, the tool head and/or shaft can be detached from the hinge members. Advantageously, a number of different heads and/or shafts may be substituted. A preferred means of achieving this is by providing a threaded section to first/second hinge members, the threaded section co-operating with a suitable section on the head/shaft member. Alternative means of engagement (such as a push fitting, bolts etc.) can easily be envisaged.

The invention also comprises a tool having a hinge arrangement such as that discussed above.

An embodiment of the invention will now be described in detail, by way of example, and with reference to the accompanying drawings, in which:
Figure 1 shows a spade according to one embodiment of the present invention;
Figures 2a, 2b and 2c are side, top and bottom views respectively of the components of the hinge mechanism of Figure 1;
Figures 3a, 3b and 3c are corresponding views of the assembled hinge mechanism;
Figures 4a, 4b and 4c are side views of the said hinge mechanism positioned at 0°, 45° and 90° respectively;
Figure 5 shows the spade of Figure 1 with the hinge in various positions; and
Figure 6 shows various tools embodying the invention;

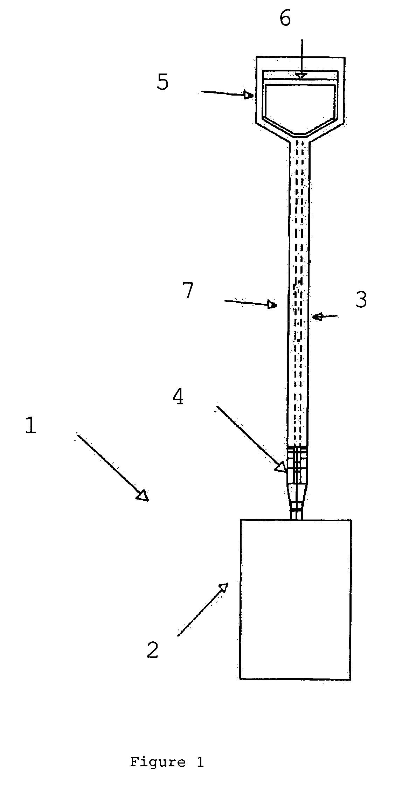

Figure 1 shows a spade (1) embodying the invention. The spade comprises a blade (2) and a shaft (3) which are connected by means of a hinge mechanism (4). The shaft (3) is hollow and is provided with a handle (5), which has associated with it an actuating handle (6) attached to an actuating rod (7). The rod passes through the hollow shaft and engages with the hinge mechanism (4) as discussed more fully below.

Figure 2a is a more detailed side view of the components of the hinge mechanism (4), which comprises a socket portion (8) which is attached to the blade and a shaft portion (9) which is attached to the shaft (blade and shaft not shown in this figure). Parts of the mechanism not visible from the side view are shown in dotted lines. When assembled, the socket portion and shaft portion are pivotably connected together by means such as a hardened steel pin passing through respective pivot pin holes (10, 11). The socket portion is provided with angularly spaced apertures (12, 13, 14). The shaft portion is hollow and an operating rod runs down the centre of the shaft. The rod is moveable between an engaged position, in which it protrudes from the shaft and a disengaged position in which the rod is withdrawn. The apertures (12, 13, 14) are so positioned that when the hinge mechanism is assembled, depending on the angle the hinge mechanism is set at, a particular aperture (12, 13, 14) faces the rod (7) which is moved into its engaged position so as to engage with the said aperture. The outer ends of the socket and shaft portions are threaded, a blade being attachable to the socket portion and a (hollow) shaft being attachable to the shaft portion. Optionally, a backplate (16) may be provided in order to physically prevent the hinge from passing its straight position.

It will also be seen that the apertures (12, 13, 14) are contained within the width of the socket portion (8). That is, the apertures cannot be seen when the socket portion (8). This is an important feature of this embodiment because it ensures that the socket portion is strong and robust, giving the hinge assembly excellent strength that is lacking in previously proposed hinge assemblies.

When viewed along the pivotal axis, the socket portion (8) has a semi-circular peripheral shape, being centred upon the pivotal axis. This ensures that the openings of the apertures (12, 13, 14) are a constant distance from the shaft portion (9). This constant distance is maintained at no more than 1mm to 2mm to ensure that the distance the rod (7) passes unsupported (a potential area of weakness) is minimised.

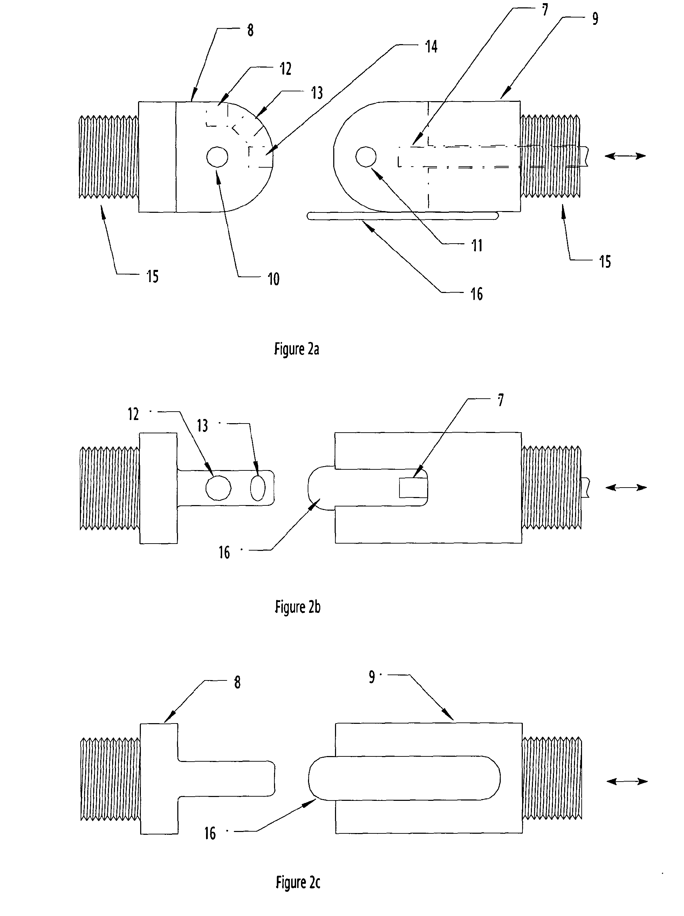

Figure 2b shows a top view corresponding to Figure 2a. It can be seen that the shaft portion (9) has a slot arranged so as to co-operate with the correspondingly shaped socket portion (8). The end of the rod (7) is shown protruding into the slot. Typically, the rod will be biased towards this position, e.g. by means of a spring or other suitable means. Figure 2c shows a corresponding bottom view. The width of the slot is only minimally greater than the thickness of the socket (8) to minimise the possibility of movement between the socket and shaft portions, other than the intended pivotal movement.

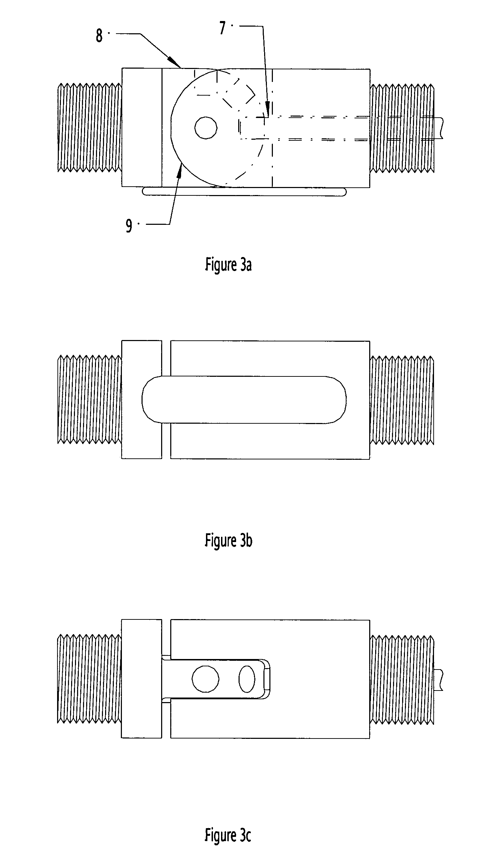

Figures 3a - 3c correspond to Figures 2a - 2c but with the hinge mechanism assembled. In this position, the socket portion is held rigid with respect to the shaft portion. It will be seen that, in this position, the hinge is shaped as a cylinder with minimal projections.

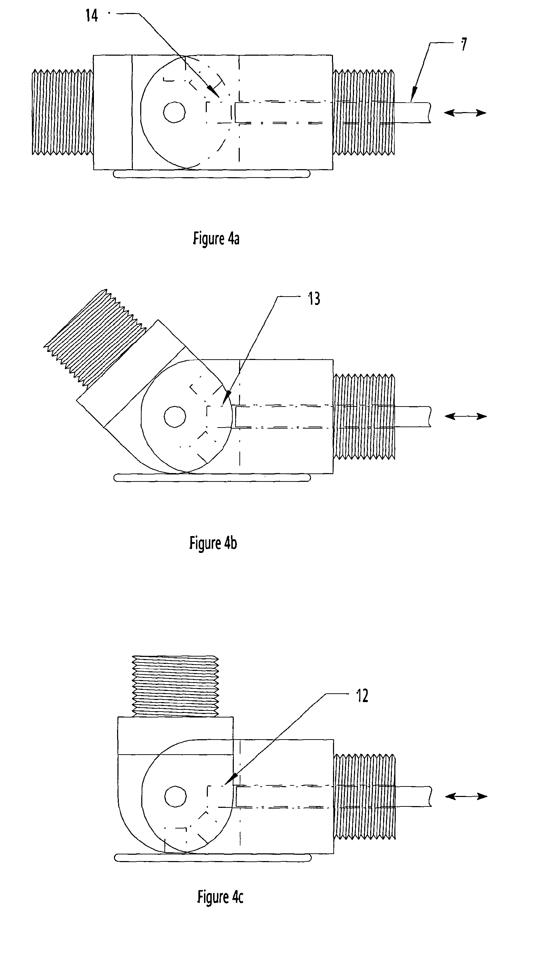

Figure 4a is similar to Figure 3a but the rod has been withdrawn so as to be clear of the aperture (14), allowing the two portions of the hinge mechanism to rotate with respect to each other. Figure 4b shows the hinge mechanism having rotated through 45°. If the rod is now moved to its engaged position, the hinge will be held rigid at this angle. Figure 4c shows the hinge rotated to 90°.

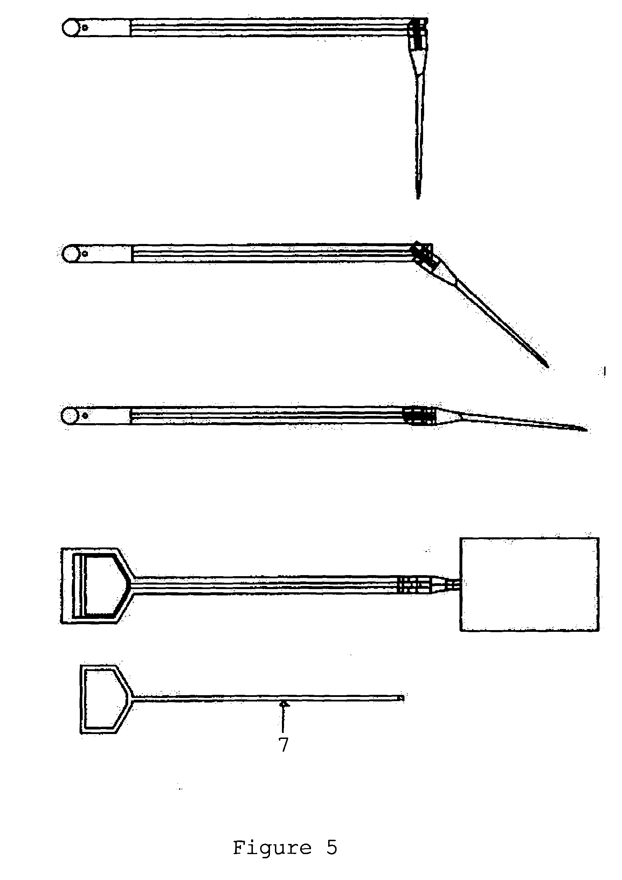

Figure 5 shows the spade of Figure 1 in various positions. Also shown is one realisation of the actuating rod (7). It can be seen that the rod is designed with a generally D-shaped handle fitting into the handle of the spade. According to this illustrated embodiment, a user can use the spade in the normal way for digging, alteration of the blade angle being performed merely by squeezing the actuation rod handle upwards so as to disengage the actuation rod from the hole and allow the blade to be tilted to 45° or 90°. Although the construction shown here allows three different angles, more or fewer angles may be provided, depending on the number and angular position of the holes. Furthermore, the holes may be replaced by slots. Preferably, means are provided to bias the rod in the engaged position. In the embodiment shown, the rod and handle are integral, but alternative constructions may also be envisaged. Furthermore, the actuating rod handle may be T-shaped or L-shaped or any suitable such shape.

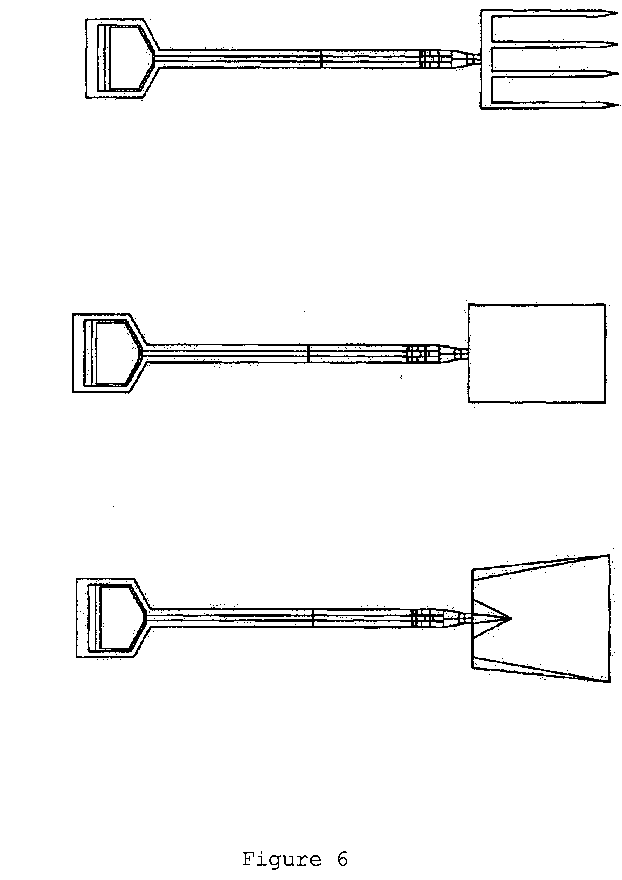

Figure 6 shows a number of different tools embodying the invention. Although a shovel, spade and fork are shown, the invention is not limited to these tools alone. Several interchangeable heads/blades may be made available, as well as for example several handles of different lengths, all fitting on to the same hinge mechanism.

The arrangement of the invention is superior to that of the prior art in that it is simple and robust, comprising only a few parts and being simple to construct and assemble. It will also be seen from the drawings that co components of the hinge arrangement to project in a manner that might cause it to become caught on articles, become clogged with soil, or injure a user.

## Claims

1. A hinge mechanism for connecting a tool head with a tool shaft, the hinge mechanism comprising first and second pivotably-connected hinge members adapted for connection with a tool head and tool shaft respectively, the first hinge member having angularly spaced apertures, the tool shaft being provided with an actuating rod which is moveable between an engaged position in which it engages with an aperture of the first hinge member to substantially prevent pivotal movement between the first and second members, and a disengaged position in which it does not so engage, rotation of the first hinge member with respect to the second hinge member presenting different apertures to the actuating rod at different rotational angles.

2. A hinge mechanism according to claim 1 in which the tool shaft is hollow, the actuating rod moving within the hollow shaft.

3. A hinge mechanism according to claim 1 or claim 2 in which means are provided to stop the tool head rotating past a certain point.

4. A hinge mechanism according to claim 3 in which said means comprise a back plate positioned so as to stop reverse rotation of the head past its straight position.

5. A hinge mechanism according to any preceding claim in which the tool head and/or shaft can be detached from the hinge members.

6. A hinge mechanism according to claim 5 in which the tool head and/or shaft can be detached from the hinge members by providing a threaded section to first/second hinge members, the threaded section co-operating with a suitable section on the head/shaft member.

7. A tool having a handle and a head, the handle having a hinge arrangement according to any preceding claim.

8. A tool having a handle and a head, the handle having a hinge arrangement according to claim 5, whereby the head can be separated from the handle.

9. A kit of tools comprising a handle, the handle having a hinge arrangement according to claim 5, and a plurality of heads, any one of the heads being suitable for fitting to the handle to construct a hinged tool.

10. A kit of tools according to claim 9 comprising a plurality of handles having a hinge mechanism according to claim 5.
